# EUROPEAN PATENT APPLICATION

(11) **EP 3 677 555 A1**
(43) Date of publication of application: **08.07.2020**
(21) Application number: 18850364.3
(22) Date of filing: 28.08.2018
(51) Int. Cl.: C03B 37/018, C03B 8/04

(54) **METHOD FOR PRODUCING GLASS FINE PARTICLE DEPOSIT, METHOD FOR PRODUCING GLASS BASE MATERIAL, AND GLASS FINE PARTICLE DEPOSIT**

(30) Priority: 29.08.2017 JP 2017164241
(71) Applicant: Sumitomo Electric Industries, Ltd., Osaka-shi, Osaka 541-0041 (JP)
(72) Inventor: HAYAKAWA Masatoshi, Osaka-shi Osaka 541-0041 (JP); ITO Masumi, Osaka-shi Osaka 541-0041 (JP)
(74) Representative: Hoffmann Eitle
(86) International application number: PCT/JP2018/031699
(87) International publication number: WO 2019/044807

(57) **Abstract**

A method for producing a glass fine particle deposit is provided, which arranges a glass synthesis burner and a starting rod in a reaction vessel, and relatively reciprocates the starting rod in an axial direction with respect to the glass synthesis burner so that glass fine particles synthesized by the glass synthesis burner are deposited on the starting rod, in which, as a diameter of the glass fine particle deposit increases, while relatively retracting the glass synthesis burner from the glass fine particle deposit, the method shortens a distance between the glass fine particle deposit and the glass synthesis burner at an end of deposition from that at a start of deposition.

## Description

### TECHNICAL FIELD

The present disclosure relates to a method for producing a glass fine particle deposit, a method for producing glass base material, and a glass fine particle deposit.

This application claims priority based on Japanese Patent Application No. 2017-164241 filed on Aug. 29, 2017, the contents of which are incorporated herein by reference in its entirety.

### BACKGROUND ART

The following related documents describe a method for producing a glass fine particle deposit by depositing glass fine particles on a starting rod by a vapor phase synthesis.

Patent Literature 1 describes that the burner is retracted in accordance with the growth (expansion) of the diameter of the glass fine particle deposit.

Patent Literature 2 describes that the burner is retracted in accordance with the growth of the diameter of the glass fine particle deposit to maintain the interval between the deposit surface and the burner substantially constant.

Patent Literature 3 describes that, while the growth of the diameter of the glass fine particle deposit is measured, the burner retreat speed is changed accordingly to make the reaction point (reaction temperature) of the glass raw material substantially constant.

### CITATION LIST

### PATENT LITERATURE

Patent Literature 1; JP-A-2012-62203
Patent Literature 2; JP-A-H10-53430
Patent Literature 3; JP-A-2013-43804

### SUMMARY OF INVENTION

A method for producing a glass fine particle deposit according to the present disclosure is
a method for producing a glass fine particle deposit, which arranges a glass synthesis burner and a starting rod in a reaction vessel, and relatively reciprocates the starting rod in an axial direction with respect to the glass synthesis burner so that glass fine particles synthesized by the glass synthesis burner are deposited on the starting rod, in which,
as a diameter of the glass fine particle deposit increases, the method shortens a distance between the glass fine particle deposit and the glass synthesis burner at an end of deposition from that at a start of deposition while relatively retracting the glass synthesis burner from the glass fine particle deposit.

In addition, a method for producing glass base material according to the present disclosure includes a transparentizing process of producing a glass fine particle deposit by the method for producing a glass fine particle deposit described above, and heating the produced glass fine particle deposit to produce a transparent glass base material.

Further, when the distance from the surface of the starting rod to the deposit surface of the glass fine particle deposit is 1, the glass fine particle deposit according to the present disclosure has a variation rate of the bulk density in the radial direction of 5% or less in a range in which the radial distance is 10% or more and 100% or less.

### BRIEF DESCRIPTION OF DRAWINGS

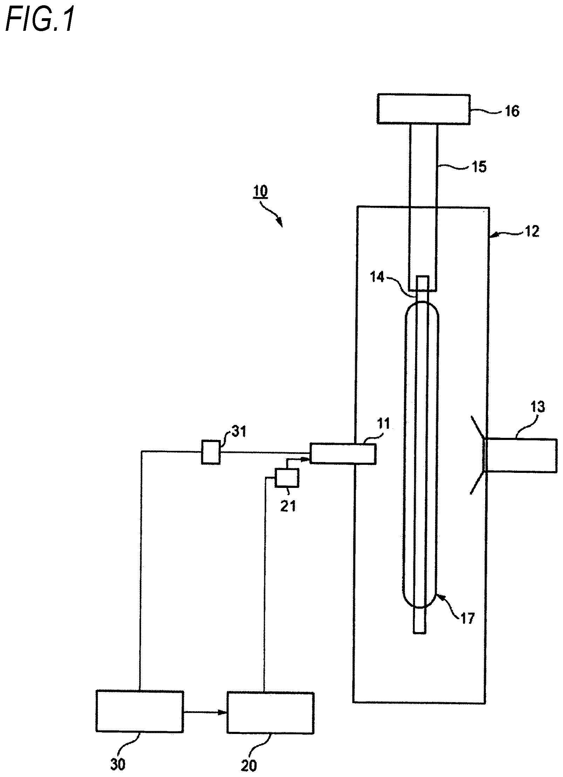

FIG. 1 is a configuration diagram showing an embodiment of a producing apparatus that performs a method for producing a glass fine particle deposit according to an embodiment of the present disclosure.

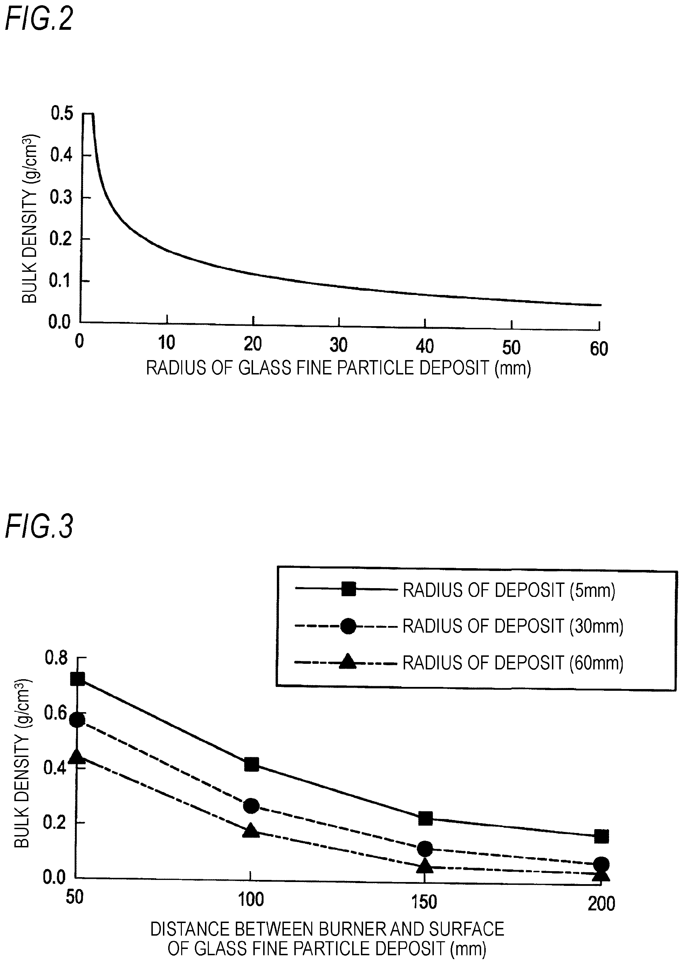

FIG. 2 is a graph showing an example of a relationship between a radius (horizontal axis) of a glass fine particle deposit and a bulk density (vertical axis) of glass fine particle, when the glass fine particle deposit is produced with a constant distance between the glass fine particle deposit and the glass synthesis burner.
FIG. 3 is a graph showing a relationship between a distance (horizontal axis) between a glass fine particle deposit and a glass synthesis burner and a bulk density (vertical axis) of glass fine particle, by plotting the results of producing a deposit a plurality of times while varying the distance between the glass fine particle deposit and the glass synthesis burner at the same radial position of the deposit.

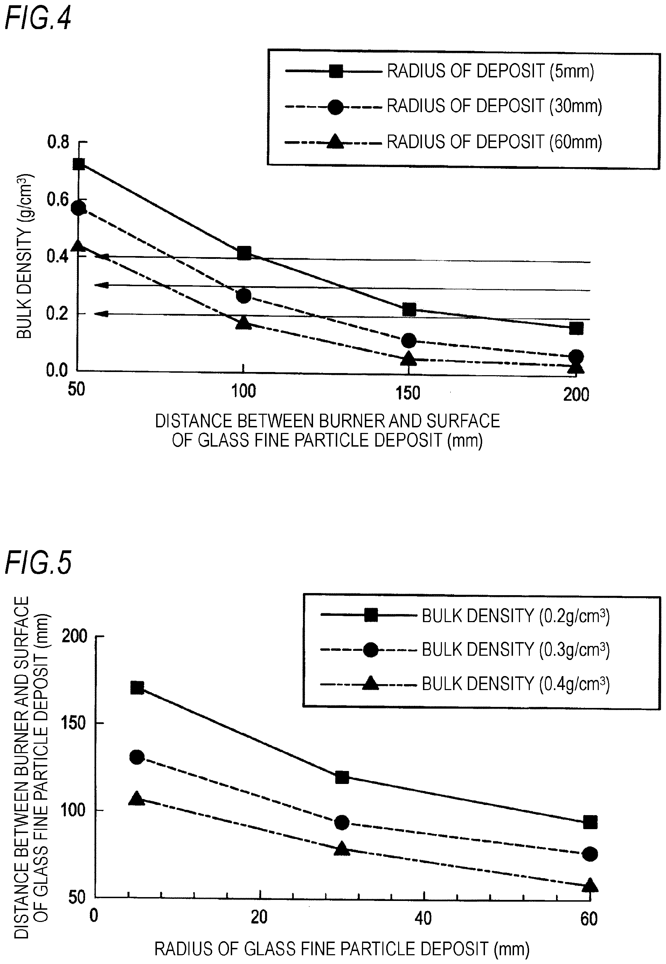

FIG. 4 is a diagram for studying optimization of the distance between the surface of the glass fine particle deposit and the glass synthesis burner in order to make the bulk density of the glass fine particles same (uniform) in the radial direction.
FIG. 5 is a graph showing a relationship between a radius (horizontal axis) of a glass fine particle deposit and a distance (vertical axis) from a glass synthesis burner in order to obtain a glass fine particle deposit having a bulk density of 0.2, 0.3, and 0.4 g/cm³ respectively, using a producing method according to an embodiment of the present disclosure.

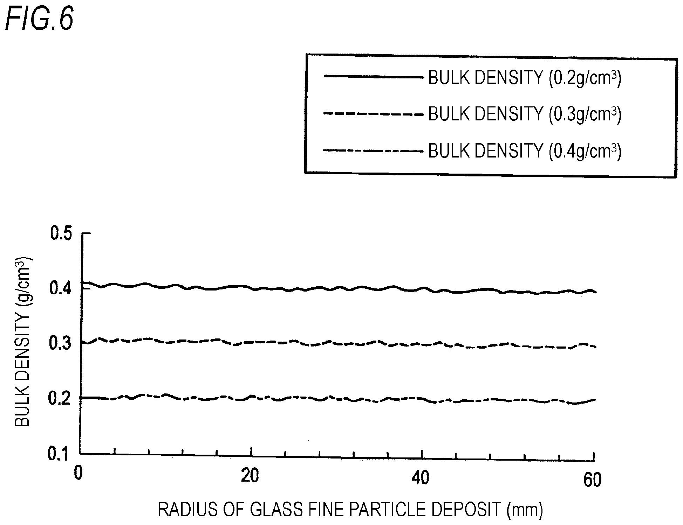

FIG. 6 is a graph showing a relationship between the radius (horizontal axis) of the glass fine particle deposit produced by the method for producing a glass fine particle deposit according to an embodiment of the present disclosure and the bulk density (vertical axis) of the glass fine particle.

### [TECHNICAL PROBLEM]

In the production of a glass fine particle deposit by Outside Vapor Deposition (OVD) method, while the starting rod is rotated and reciprocated up and down by a traverse device, glass fine particles are generated by a burner flame and sprayed toward the starting rod to be deposited. Normally, since the glass fine particles are deposited on the starting rod while the starting rod is rotated at a constant speed, as the diameter of the deposit grows, the peripheral velocity of the surface of the deposit is increased. In that case, even when the interval (distance) between the surface of the deposit and the burner or the reaction point (reaction temperature) of the glass raw material is substantially constant, since the flame treatment time per unit area of the surface of the deposit decreases, the bulk density of the outer glass fine particles decreases as a result.

Meanwhile, when the bulk density of the glass fine particles on the surface is too small, there is a problem that the glass fine particle deposit is easily cracked on the surface. In addition, when the bulk density varies greatly, the glass fine particle deposit may also be cracked at the variation portion. Further, when there is a portion where the bulk density is too high, there is also a problem that it takes time during the subsequent consolidation.

In addition, the glass fine particle deposit is then consolidated into a glass base material, but when producing a glass base material having the same diameter, if the bulk density of the glass fine particle deposit is small, it is necessary to increase the diameter of the glass fine particle deposit, and there is also a problem that a large glass base material cannot be produced due to the limitation of the size of the consolidation furnace.

For these reasons, while it is desirable to form a glass fine particle deposit having a uniform bulk density in the radial direction, even when the techniques described in Patent Literatures 1 to 3 are adopted, it is difficult to obtain a glass fine particle deposit having a uniform bulk density in the radial direction.

Thus, the present disclosure provides a method capable of producing a glass fine particle deposit having a uniform radial bulk density, a method for producing a glass base material, and a glass fine particle deposit.

### ADVANTAGEOUS EFFECTS OF INVENTION

According to the present disclosure, it is possible to produce a glass fine particle deposit having a uniform bulk density in the radial direction.

### DESCRIPTION OF EMBODIMENTS

First, the contents of the embodiments of the present disclosure will be listed and described. Note that the present disclosure is not limited to these exemplifications, but is indicated by the claims, and includes all modifications within the scope and meaning equivalent to the scope of the claims. A method for producing a glass fine particle deposit according to one aspect of the present disclosure is
(1) a method for producing a glass fine particle deposit, which arranges a glass synthesis burner and a starting rod in a reaction vessel, and relatively reciprocates the starting rod in an axial direction with respect to the glass synthesis burner so that glass fine particles synthesized by the glass synthesis burner are deposited on the starting rod, in which,
   as a diameter of the glass fine particle deposit increases, while relatively retracting the glass synthesis burner from the glass fine particle deposit, the method shortens a distance between the glass fine particle deposit and the glass synthesis burner at an end of deposition from that at a start of deposition.
   With this configuration, it is possible to produce a glass fine particle deposit having a uniform bulk density in the radial direction.
(2) As the diameter of the glass fine particle deposit increases, it is preferable that, while the glass synthesis burner is relatively retracted from the glass fine particle deposit, a rate of change of the distance between the glass fine particle deposit and the glass synthesis burner in accordance with an increase in the diameter of the glass fine particle deposit is gradually reduced as time elapses from the start of deposition.
   With this configuration, it is possible to more reliably produce a glass fine particle deposit having a uniform bulk density in the radial direction.
(3) It is preferable to use siloxane as a raw material for glass synthesis.
   With this configuration, the raw material used does not contain corrosive halogen and thus the problem of corrosion of the producing apparatus or the like due to the exhaust gas and the exhaust gas treatment equipment can be eliminated, and also the combustibility is high, so that it is possible to increase the production efficiency of the glass fine particle deposit.
(4) It is preferable to use octamethylcyclotetrasiloxane (OMCTS) as the siloxane.
   With this configuration, the raw materials used can be easily obtained industrially, and allow ease of storage and handling.
(5) In addition, the method for producing glass base material according to one aspect of the present disclosure includes a transparentizing process of producing a glass fine particle deposit by the method for producing a glass fine particle deposit according to any one of the (1) to (4) described above, and heating the produced glass fine particle deposit to produce a transparent glass base material.
   With this configuration, a high-quality glass base material may be produced.
(6) Further, when the distance from the surface of the starting rod to the deposit surface of the glass fine particle deposit is 1, the glass fine particle deposit according to one aspect of the present disclosure has a variation rate of the bulk density in the radial direction of 5% or less in the range in which the radial distance is 10% or more and 100% or less.
   With this configuration, it is possible to obtain a glass fine particle deposit that has a uniform bulk density in the radial direction and that is less likely to be soot cracked, and a high quality glass base material that is obtained through a transparentizing process by subsequent heating (consolidation) may be achieved. Further, an optical fiber having excellent optical characteristics may be produced using the glass base material.

### DESCRIPTION OF EMBODIMENT

### [Overview of Equipment Used, Etc.]

Hereinafter, an example of an embodiment of a method for producing a glass fine particle deposit (hereinafter, also simply referred to as a "deposit") and a method for producing a glass base material according to an embodiment of the present disclosure will be described with reference to the accompanying drawings. In the drawings, a gas supply device of flame forming gas is omitted, and the description in the text is also omitted.

Further, as a producing method described below, Outside Vapor Deposition (OVD) method will be described as an example, but the present disclosure is not limited to the OVD method. In addition to the OVD method, the present disclosure may be applied to a method of depositing glass from a glass raw material using a flame pyrolysis reaction such as, for example, Multiburner Multilayer Deposition (MMD) method, and the like.

As shown in FIG. 1, a producing apparatus 10 for performing the method for producing a deposit according to the present embodiment includes a glass synthesis burner (hereinafter, also simply referred to as "burner") 11, a reaction vessel 12, and a traverse device 16.

The reaction vessel 12 includes an exhaust pipe 13 on a side wall surface facing the burner 11. The exhaust pipe 13 exhausts a predetermined amount of gas to remove glass fine particles floating in the reaction vessel 12 that have not been deposited on a deposit 17.

The traverse device 16 holds an upper portion of a starting rod 14 with a support rod 15 and rotates and reciprocates up and down the starting rod 14 in the reaction vessel 12.

The producing apparatus 10 includes a gas supply device 20 that supplies a raw material gas or the like of a raw material for glass synthesis (hereinafter, also simply referred to as "glass raw material" or "raw material") to the burner 11, and a control device 30 that controls the gas supply device 20 and the like. The gas supply device 20 is controlled by the control device 30 and supplies a raw material gas (OMCTS or the like) in a source tank (not shown) to the burner 11 through an MFC 21 disposed on a line. The flow rate of the raw material supplied to the burner 11 is controlled by the MFC 21 to a specified flow rate.

At the burner 11, the raw material gas is oxidized to produce glass fine particles. A description of a gas supply device of a general gas (an inert gas such as O₂, H₂, and N₂ or the like) such as the flame forming gas will be omitted.

A movement motor 31 is connected to the burner 11. The drive of the movement motor 31 is controlled by the control device 30. The burner 11 is moved by the movement motor 31 so that the distance between a depositing surface of the deposit 17 and a tip end of the burner 11 is adjusted.

Note that the movement motor 31 only needs to be able to linearly control the movement of the corresponding burner 11 from the deposit 17 and, for example, a linear motor or a stepping motor may be used.

### [Overview of Producing Method, Etc.]

Using the producing apparatus 10, the deposit 17 is produced by the vapor phase synthesis method. Specifically, by the traverse device 16, the starting rod 14 is rotated and reciprocated up and down. In addition, glass fine particles are generated and sprayed toward the starting rod 14 by the burner 11. As a result, the glass fine particles are deposited on an outer periphery of the starting rod 14, and the deposit 17 grows in the radial direction. In such a producing method, conventionally, the burner 11 is retracted in accordance with the growth of the diameter of the deposit 17 so that the distance between the surface of the deposit 17 and the burner 11, or the reaction point (reaction temperature) of the glass raw material is adjusted to be substantially constant (Patent Literatures 1 to 3 described above). In such a vapor phase synthesis method, typically, glass fine particles are deposited on the starting rod 14 while the starting rod 14 is rotated in the reaction vessel 12 at a constant speed. In this case, the peripheral speed of the surface of the deposit 17 increases as the diameter of the deposit 17 grows. In that case, even when the interval (distance) between the surface of the deposit 17 and the burner 11 or the reaction point (reaction temperature) of the glass raw material is substantially constant, the flame treatment time per unit area of the surface of the deposit 17 is reduced and the deposited amount of the glass fine particles is reduced accordingly. As a result, as shown in the graph of FIG. 2, as the diameter (horizontal axis) grows, the bulk density of the glass fine particles of the deposit 17 decreases. In FIG. 2, the point at 0 mm on the horizontal axis indicates the surface position of the starting rod 14, and the horizontal axis indicates the distance from the surface of the starting rod 14.

When the bulk density is too small, there is a problem that the deposit 17 is easily cracked on the surface. Further, when the bulk density varies greatly, the deposit 17 may also be cracked at the variation portion. Further, when there is a portion where the bulk density is too high, there is also a problem that it takes a long time for subsequent consolidation.

The deposit 17 is used for producing an optical fiber by obtaining a glass base material through a transparentizing process by subsequent heating (consolidation) and further drawing the glass base material, but if the bulk density of the glass fine particles is small, there is a problem that, when producing a glass base material having the same diameter, it is necessary to increase the diameter of the deposit 17 and a large glass base material cannot be produced due to the limitation of the size of the consolidation furnace.

For this reason, it is desired to efficiently produce the deposit 17 having a uniform bulk density in the radial direction.

Therefore, first, the present inventors varied the distance between the burner and the deposit (50 mm, 100 mm, 150 mm, 200 mm) and produced glass fine particle deposits while maintaining those distances, and then obtained four patterns from the result of FIG. 2, and, with respect to each pattern, plotted, from the value of the bulk density at the position of the same radius, the relationship between the distance between the surface of the deposit 17 and the tip end of the burner 11 (hereinafter simply referred to as "distance") and the bulk density of the glass fine particles (hereinafter, also simply referred to as "bulk density") at the same radius of the deposit, as shown in the graph of FIG. 3. When the graph of FIG. 3 was obtained, the rotation speed, the flame conditions, and the like of the deposit 17 remained the same. The radius valuesshown in FIG. 3 indicate the distance from the surface of the starting rod 14.

Then, as shown in the graph of FIG. 4, by drawing a line parallel to the horizontal axis on the graph of FIG. 3, it is possible to estimate how long the distance is at a point in time when the deposit 17 reaches a certain radius, which are appropriate in order for the bulk density to be the same (uniform) in the radial direction.

For example, in order to obtain a deposit 17 having a uniform bulk density of 0.3 g/cm³ in the radial direction, it may be estimated that the distance is about 130 mm when the radius of the deposit 17 is 5 mm, the distance is about 97 mm when the radius is 30 mm, and the distance is about 80 mm when the radius is 60 mm.

For example, in order to obtain a deposit 17 having a uniform bulk density of 0.4 g/cm³ in the radial direction, it may be estimated that the distance is about 105 mm when the radius is 5 mm, the distance is about 80 mm when the radius is 30 mm, and the distance is about 60 mm when the radius is 60 mm.

Likewise, in order to obtain a deposit 17 having a uniform bulk density of 0.2 g/cm³ uniformly in the radial direction, it may be estimated that the distance is about 170 mm when the radius is 5 mm, the distance is about 125 mm when the radius is 30 mm, and the distance is about 100 mm when the radius is 60 mm.

From the above, in order to obtain a deposit 17 respectively having a bulk density of 0.2, 0.3, and 0.4 g/cm³ in the same (uniform) radial direction, as shown in FIG. 5, as the radius (horizontal axis) of the deposit 17 increases, the burner 11 may be relatively retracted from the deposit 17 so that the distance between the deposit 17 and the burner 11 may be shorter at the end of deposition than at the start of deposition. More preferably, the rate of change of the distance between the deposit 17 and the burner 11 in accordance with the increase in the diameter of the deposit 17 may be gradually reduced. As shown in FIG. 5, taking the deposit 17 having a bulk density of 0.2 g/cm³ as an example, when the radius of the deposit 17 is 5 mm, the distance between the deposit 17 and the burner 11 is 170 mm, and when the radius is 30 mm, the distance is 125 mm. For this reason, as the radius grows from 5 mm to 30 mm, the distance is shortened by 45 mm while the radius of the deposit 17 grows by 25 mm. That is, when the radius is between 5 mm and 30 mm, the distance is shortened at a rate of 1.8 mm for 1 mm of growth of the radius of the deposit 17. In addition, since the distance is 100 mm when the radius of the deposit 17 is 60 mm, as the radius grows from 30 mm to 60 mm, the distance is shortened by 25 mm while the radius of the deposit 17 grows by 30 mm. That is, when the radius is between 30 mm and 60 mm, the distance is shortened at a rate of 0.84 mm for 1 mm of growth of the radius of the deposit 17. Therefore, as the radius of the deposit 17 increases, the rate of change of the distance between the deposit 17 and the burner 11 decreases. By doing so, the finally obtained deposit 17 has the same (uniform) bulk density in the radial direction as shown in FIG. 6.

In addition, it is possible to prevent the deposit 17 from cracking on its surface and also prevent glass fine particles from peeling off during the production of the deposit 17.

Also in FIGS. 5 and 6, the point of 0 mm on the horizontal axis indicates the surface position of the starting rod 14, and the horizontal axis indicates the distance from the surface of the starting rod 14.

The deposit 17 having a uniform bulk density of 0.4 g/cm³ and 0.2 g/cm³ respectively in the radial direction may be produced by the same idea as the case of producing the deposit 17 having a uniform bulk density is 0.3 g/cm³ in the radial direction described above.

Thus, in the glass fine particle deposit produced according to the present embodiment, when the distance from the surface of the starting rod to the surface of the deposition surface of the glass fine particle deposit is 1, the variation rate of the bulk density in the radial direction is 5% or less in a range in which the radial distance is 10% or more and 100% or less, and a glass fine particle deposit having a uniform bulk density in the radial direction may be obtained. When the variation rate of the bulk density in the radial direction is 5% or less, the glass fine particle deposit does not crack.

The "bulk density" may be calculated by "increased weight / increased volume" by determining an outer diameter of the deposit on-line and measuring the weight of the deposit on-line, for example.

The "variation rate" of the radial bulk density may be calculated by "magnitude of variation / average bulk density".

Next, the procedure of the method for producing the glass fine particle deposit and the glass base material will be described.

### [Deposition Process]

Using the producing apparatus 10 described above, glass fine particles are deposited by OVD method (outside method), and the glass fine particle deposit 17 is produced.

### [Transparentizing Process]

Next, the obtained glass fine particle deposit 17 is heated to 1100°C in a mixed atmosphere of an inert gas and chlorine gas, and then heated to 1550°C in a He atmosphere to obtain a transparent glass base material.

### [Various Producing Conditions]

Note that, although the glass raw material that is liquid is ejected from the burner 11 in a gas state in the embodiment described above, the glass raw material may be ejected from the burner 11 in a liquid spray state rather than a gas state. In an aspect in which the glass raw material is ejected from the burner 11 in the liquid spray state, the liquid raw material ejected from a liquid raw material port (not shown) of the burner 11 is atomized by applying a gas ejected from an ejection gas port (not shown). Examples of the gas ejected from the ejection gas port include nitrogen (N₂), oxygen (O₂), argon (Ar), and the like, and these are ejected alone or in combination.

The glass raw material is not particularly limited as long as it can generate glass fine particles by an oxidation reaction in the embodiment described above. Examples include silicon tetrachloride (SiCl₄), siloxane, and the like. Among these, siloxane was used in comparison with SiCl₄, and as a result, it did not generate corrosive gas such as chlorine and had high combustibility, which is preferable in that the production efficiency of the glass fine particle deposit may be increased. Further, among siloxanes, cyclic siloxanes are preferable because they are easily available industrially, and allow ease of storage and handling, and among these, OMCTS is more preferable.

Further, in the present embodiment, although a producing apparatus including one burner as shown in FIG. 1 is used for the sake of simplicity of description, an MMD method including a plurality of burners may be applied as necessary.

### [Operational Effect]

According to the method of the embodiment described above, the variation in the deposition amount of the glass fine particles per unit volume is suppressed, and a glass fine particle deposit having a uniform bulk density in the radial direction can be produced.

### REFERENCE SIGNS LIST

- 10:: producing apparatus
- 11:: glass synthesis burner
- 12:: reaction vessel
- 13:: exhaust pipe
- 14:: starting rod
- 15:: support rod
- 16:: traverse device
- 17:: glass fine particle deposit
- 20:: gas supply device
- 21:: MFC
- 30:: control device
- 31:: movement motor

## Claims

1. A method for producing a glass fine particle deposit comprising:
arranging a glass synthesis burner and a starting rod in a reaction vessel;
relatively reciprocating the starting rod in an axial direction with respect to the glass synthesis burner so that glass fine particles synthesized by the glass synthesis burner are deposited on the starting rod, and
as a diameter of the glass fine particle deposit increases, while relatively retracting the glass synthesis burner from the glass fine particle deposit, shortening a distance between the glass fine particle deposit and the glass synthesis burner at an end of deposition from that at a start of deposition.

2. The method for producing a glass fine particle deposit according to claim 1, comprising:
as a diameter of the glass fine particle deposit increases, while relatively retracting the glass synthesis burner from the glass fine particle deposit, gradually reducing a rate of change of the distance between the glass fine particle deposit and the glass synthesis burner in accordance with an increase in the diameter of the glass fine particle deposit as time elapses from the start of deposition.

3. The method for producing a glass fine particle deposit according to claim 1 or 2, wherein siloxane is used as a raw material for glass synthesis.

4. The method for producing a glass fine particle deposit according to claim 3, wherein octamethylcyclotetrasiloxane (OMCTS) is used as the siloxane.

5. A method for producing a glass base material comprising:
a transparentizing process of producing a glass fine particle deposit by the method for producing the glass fine particle deposit according to any one of claims 1 to 4, and heating the produced glass fine particle deposit to produce a transparent glass base material.

6. A glass fine particle deposit, wherein, when a distance from a surface of a starting rod to a deposit surface of a glass fine particle deposit is 1, with respect to a distance in a radial direction in a range of 10% or more and 100% or less, a variation rate of a bulk density in the radial direction is 5% or less.
